# EUROPEAN PATENT APPLICATION

(11) **EP 4 653 984 A1**
(43) Date of publication of application: **26.11.2025**
(21) Application number: 24829898.6
(22) Date of filing: 29.02.2024
(51) Int. Cl.: G06F 1/3203

(54) **METHOD FOR CONTROLLING ALWAYS ON DISPLAY, AND ELECTRONIC DEVICE AND STORAGE MEDIUM**

(30) Priority: 30.06.2023 CN 202310804902
(71) Applicant: Honor Device Co., Ltd., Shenzhen, Guangdong 518040 (CN)
(72) Inventor: ZHUANG, Ruigang, Shenzhen, Guangdong 518040 (CN); TIAN, Qifei, Shenzhen, Guangdong 518040 (CN)
(74) Representative: Goddar, Heinz J.
(86) International application number: PCT/CN2024/079220
(87) International publication number: WO 2025/001242

(57) **Abstract**

This application provides an always on display control method, an electronic device, and a storage medium, and relates to the field of display technologies. According to the solutions of this application, once a touchscreen driver receives a screen touching event in a screen-off state, the touchscreen driver immediately notifies a display driver to perform a power-on procedure, so that a display screen starts power-on and initialization in advance. Further, as in a related technology, the touchscreen driver transfers the screen touching event in the screen-off state to an AOD application, and the AOD application starts an always on display procedure. In this way, a power-on procedure of the display screen and an always on display start procedure can be implemented in parallel, and therefore, overall time consumption of the always on display procedure is greatly reduced. Therefore, when a user touches the display screen in the screen-off state, always on display becomes faster, thereby improving user experience.

## Description

This application claims priority to Chinese Patent Application No. 202310804902.X, filed with the China National Intellectual Property Administration on June 30, 2023 and entitled "ALWAYS ON DISPLAY CONTROL METHOD, ELECTRONIC DEVICE, AND STORAGE MEDIUM", which is incorporated herein by reference in its entirety.

### TECHNICAL FIELD

This application relates to the field of communication technologies, and in particular, to an always on display control method, an electronic device, and a storage medium.

### BACKGROUND

With rapid development of electronic technologies, electronic devices such as a smartphone and a tablet computer are provided with increasing more functions, and have become indispensable tools in people's lives and work. By using a mobile phone as an example, a user often lights up a screen of the mobile phone to view information such as time and a notification. To facilitate the user to view basic information such as time, and reduce power consumption of the electronic device, an always on display (always on display, AOD) function of the electronic device emerges.

An implementation principle of the AOD function is as follows: After the screen of the electronic device is turned off, some pixels of the screen may be lit up to display information such as a clock, a date, an electricity quantity, and a message reminder, while other pixels of the screen are always in a turn-off state. For example, the pixels in the turn-off state are presented in black, so that the user can conveniently view the foregoing information without lighting up the entire screen of the electronic device, thereby lowering power consumption of the electronic device.

Currently, when the electronic device is in a screen-off state, it takes a long time for an always on pattern to be displayed after the user touches the screen. In other words, in a related technology, an always on display procedure in the screen-off state has a problem of timeconsuming.

### SUMMARY

This application provides an always on display control method, an electronic device, and a storage medium. In a screen touching scenario in a screen-off state, an always on display start procedure and a power-on procedure of a display screen are simultaneously performed, which significantly shortens time consumption of always on display and improves user experience.

According to a first aspect, this application provides an always on display control method. The method is applied to an electronic device, the electronic device includes a processor and a display screen, the processor includes an always on display AOD application, a display driver, and a touchscreen driver, and the method includes:

When the display screen is in a screen-off state, the display driver receives a screen touching event transferred by the touchscreen driver (the screen touching event is a preset screen touching operation of a user on the display screen); the display driver triggers power-on and initialization of the display screen in response to the screen touching event; the display driver starts timing from a moment at which power-on of the display screen is triggered; the display driver receives a power-on instruction from the AOD application; in response to the power-on instruction, the display driver determines whether timing duration is greater than or equal to preset duration; when the timing duration is greater than or equal to the preset duration, the display driver returns a completion message; or when the timing duration is less than the preset duration, the display driver waits until the timing duration is greater than or equal to the preset duration and returns the completion message; the display driver receives an AOD display instruction from the AOD application; and the display driver triggers, in response to the AOD display instruction, the display screen to display an always on pattern.

According to the always on display control method provided in this embodiment of this application, once the touchscreen driver receives the screen touching event in the screen-off state, the touchscreen driver immediately notifies the display driver to perform a power-on procedure, so that the display screen starts power-on and initialization in advance. Further, as in a related technology, the touchscreen driver transfers the screen touching event in the screen-off state to the AOD application, and the AOD application starts an always on display procedure. In this way, the power-on procedure of the display screen and an always on display start procedure can be implemented in parallel, and therefore, overall time consumption of the always on display procedure is greatly reduced. Therefore, when the user touches the display screen in the screen-off state, always on display becomes faster, thereby improving user experience.

In the related technology, when the display screen is in the screen-off state, if the touchscreen driver receives the screen touching event, the touchscreen driver transfers the screen touching event in the screen-off state to an input subsystem, and then the input subsystem transfers the screen touching event to the AOD application. The AOD application starts the always on display procedure, and then the display driver triggers power-on and initialization of the display screen. After completing power-on and initialization, the display driver triggers the display screen to display the always on pattern, to implement the always on display.

In comparison with the related technology, an improvement in the solutions of this application lies in that: After the touchscreen driver senses the screen touching event in the screen-off state, the touchscreen driver notifies the display driver to perform the power-on procedure. Simultaneously, the touchscreen driver transfers the screen touching event in the screen-off state to the input subsystem, and then the input subsystem transfers the screen touching event in the screen-off state to the AOD application, to trigger the always on display start procedure.

In other words, after the touchscreen driver senses the screen touching event in the screen-off state, the touchscreen driver immediately notifies the display driver to perform the power-on procedure, and simultaneously notifies the AOD application to start the always on display procedure. In comparison with the related technology, in the always on display procedure of this application, the display driver performs the power-on procedure in advance. It may be understood that, before the always on display procedure is started, the display driver has started to perform the power-on procedure. In addition, after the always on display procedure is started, the display driver has completed the power-on procedure or is about to complete the power-on procedure. This has the beneficial effect that simultaneously performing the power-on procedure of the display screen and the always on display start procedure significantly shortens time consumption of the always on display.

In another possible implementation, when the touchscreen driver receives the screen touching event in the screen-off state, the touchscreen driver immediately notifies the display driver to perform the power-on procedure of the display screen, so that the display screen starts power-on in advance. Time consumption of power-on is approximately within a range of [20 ms, 50 ms]. Simultaneously, the touchscreen driver transfers the screen touching event in the screen-off state to the AOD application. The AOD application starts the always on display procedure: The AOD application delivers an AOD start instruction to the display screen, and the AOD start instruction may carry an initialization parameter of the display screen. When the display screen receives the initialization parameter of the display screen, because the display screen has completed power-on in advance, the display screen can quickly enter initialization. In this case, some time consumption can also be reduced, so that the always on display becomes faster.

In some possible implementations, that the display driver triggers power-on and initialization of the display screen in response to the screen touching event includes: The display driver determines that the screen touching event meets an always on display trigger condition; and the display driver triggers power-on and initialization of the display screen in response to the screen touching event.

In the foregoing solution, after the touchscreen driver senses the screen touching event in the screen-off state, the touchscreen driver notifies the AOD application to start the always on display procedure, and further notifies the display driver to perform the power-on procedure.

In comparison with that in the related technology, the touchscreen driver transfers the screen touching event in the screen-off state to the AOD application, the AOD application starts the always on display procedure, and then the display driver performs the power-on procedure, in the solutions of this application, when the touchscreen driver senses the screen touching event in the screen-off state, the touchscreen driver can immediately notify the display driver to perform the power-on procedure. In this way, time consumption of the always on display can be reduced.

In actual implementation, based on a hardware requirement of a screen IC chip specification, power-on and initialization of the display screen needs to take about 120 ms, and processing the always on display procedure by software needs to take about 150 ms. In this case, an overall AOD procedure takes a minimum of about 270 ms. According to the solutions of this application, because the power-on procedure of the display screen and the always on display start procedure can be performed in parallel, for example, time consumption of 120 ms can be reduced when the always on display procedure is implemented in the screen-off state, overall time consumption is 150 ms. It can be seen that the overall time consumption is significantly shortened. Therefore, when the user touches the display screen in the screen-off state, the always on display becomes faster, thereby improving user experience.

In some possible implementations, the always on display trigger condition includes: The electronic device has enabled an always on display function, the display screen is in the screen-off state, and a user input operation is the preset screen touching operation.

In some possible implementations, the foregoing preset screen touching operation may be an operation of touching or single-tapping the display screen.

If the screen touching event meets the always on display trigger condition, it indicates that the screen touching event may trigger the always on display. In this way, it can be ensured that a current scenario is a scenario in which the always on display is triggered by the user input operation.

It should be noted that the display driver may determine whether the screen touching event meets the always on display trigger condition, or the touchscreen driver may determine whether the screen touching event meets the always on display trigger condition. Then, when the touchscreen driver determines that the screen touching event meets the always on display trigger condition, the touchscreen driver transfers the screen touching event to the display driver, to trigger the display driver to perform the power-on procedure, or the touchscreen driver directly notifies the display driver to perform the power-on procedure.

In some possible implementations, that the display driver triggers power-on and initialization of the display screen includes: The display driver triggers a display screen integrated circuit IC to start power-on and initialization.

It should be noted that it is specified in a protocol that power-on and initialization of the display screen needs to take preset duration (denoted as T1). In other words, after the preset duration T1, the display screen completes initialization and is ready to perform a display task delivered by the display driver. That is, the display driver needs to wait for the preset duration T1, that is, wait until the display screen completes initialization, before returning a power-on completion message to an upper layer, to further complete the always on display.

In the solutions of this application, the processor may further include a drawing module and a backlight module. The drawing module is configured to draw an always on pattern. The backlight module is configured to collect an AOD backlight parameter. The AOD may respectively invoke the always on pattern and the AOD backlight parameter from the drawing module and the backlight module, and generate the AOD display instruction based on the always on pattern and the AOD backlight parameter.

In some possible implementations, that the display driver triggers, in response to the AOD display instruction, the display screen to display an always on pattern includes: The display driver sends the AOD display instruction to the display screen IC, so that the display screen IC controls, based on the AOD display instruction, the display screen to enable backlight based on the AOD backlight parameter and display the always on pattern.

In the solutions of this application, the processor further includes the input subsystem. The screen touching event is further transferred to the input subsystem by the touchscreen driver, and the input subsystem transfers the screen touching event to the AOD application. The power-on instruction and the AOD display instruction are instructions delivered by the AOD application in response to the screen touching event.

In some possible implementations, a moment at which the screen touching event is transferred to the display driver is earlier than or equal to a moment at which the screen touching event is transferred to the AOD application.

In comparison with a related technical procedure, in the solutions of this application, after the touchscreen driver senses the screen touching event in the screen-off state, the touchscreen driver notifies the AOD application to start the always on display procedure, and further notifies the display driver to perform the power-on procedure. In addition, the power-on procedure of the display screen is performed earlier than the always on display start procedure, or the power-on procedure of the display screen and the always on display start procedure are simultaneously performed.

This has the beneficial effect that: before the always on display procedure is started, the display driver has started to perform the power-on procedure. In addition, after the always on display procedure is started, the display driver has completed the power-on procedure or is about to complete the power-on procedure. In this way, time consumption of the always on display is significantly shortened by performing the always on display start procedure and the power-on procedure of the display screen in parallel.

In the solutions of this application, the processor further includes a power manager service module, a surface drawing SurfaceFlinger service module, and a hardware composer HWC. The power-on instruction is delivered by the AOD application, and reaches the display driver through transmission by using the power manager service module, the SurfaceFlinger service module, and the HWC.

After the power-on instruction is transmitted to the HWC module, the HWC module sends the power-on instruction to the display driver; and when the HWC module receives the completion message returned by the display driver, the HWC module sends the AOD display instruction to the display driver.

In the solutions of this application, in response to the screen touching event in the screen-off state, the AOD application delivers the AOD start instruction to a lower layer, and the AOD start instruction includes the power-on instruction and the AOD display instruction. The AOD start instruction sequentially passes through the power manager service module and the SurfaceFlinger service module in a software architecture, and then reaches the HWC. The HWC first delivers the power-on instruction to the display driver. In this case, because the display screen has completed power-on or is about to complete power-on, the display driver does not need to trigger power-on of the display screen.

For different cases in which the display screen has completed power-on or is about to complete power-on, responses made by the display driver are different:
Case 1: When the display screen has completed power-on, the display driver directly returns an OK message to the HWC. Case 2: When the display screen is about to complete power-on, the display driver waits for the display screen to complete power-on, and then returns the OK message to the HWC.

After the HWC receives the OK message returned by the display driver, the HWC sends the AOD display instruction to the display driver, and then the display driver sends the AOD display instruction to the display screen. The display screen displays the always on pattern in response to the AOD display instruction.

In comparison with the related technical procedure, in the solutions of this application, before the always on display procedure is started, the display driver has started to perform the power-on procedure. In addition, after the always on display procedure is started, the display driver has completed the power-on procedure or is about to complete the power-on procedure. In this way, time consumption of the always on display is significantly shortened by performing the always on display start procedure and a processing procedure of the display screen in parallel.

According to a second aspect, this application provides an always on display control apparatus. The apparatus includes a unit configured to perform the method in the first aspect. The apparatus may correspondingly perform the method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides an electronic device. The electronic device includes a display screen, a processor, and a computer program or instructions stored in the processor and a memory. The processor is configured to execute the computer program or the instructions, to enable the method in the first aspect to be performed.

According to a fourth aspect, this application provides a computer-readable storage medium. The computer-readable storage medium stores a computer program (which may also be referred to as instructions or code) used to implement the method in the first aspect. For example, when the computer program is executed by a computer, the computer is enabled to perform the method in the first aspect.

According to a fifth aspect, this application provides a chip, including a processor. The processor is configured to read and execute a computer program stored in a memory, to perform the method in any one of the first aspect and the possible implementations of the first aspect. Optionally, the chip further includes a memory, and the memory is connected to the processor by using a circuit or a wire.

According to a sixth aspect, this application provides a chip system, including a processor. The processor is configured to read and execute a computer program stored in a memory, to perform the method in any one of the first aspect and the possible implementations of the first aspect. Optionally, the chip system further includes a memory, and the memory is connected to the processor by using a circuit or a wire.

According to a seventh aspect, this application provides a computer program product. The computer program product includes a computer program (which may also be referred to as instructions or code), and when the computer program is executed by an electronic device, the electronic device is enabled to implement the method in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1A and FIG. 1B are a schematic diagram of an application scenario of an always on display control method according to an embodiment of this application;
FIG. 2 is a schematic diagram of an always on display process in an always on display control method according to an embodiment of this application;
FIG. 3 is a schematic diagram of a comparison between an always on display control method according to an embodiment of this application and that according to a related technology;
FIG. 4 is a schematic diagram of a structure of an electronic device according to an embodiment of this application;
FIG. 5 is a schematic diagram of a software architecture of an electronic device according to an embodiment of this application;
FIG. 6 is a schematic flowchart of an always on display control method according to a related technology;
FIG. 7 is a diagram of a time sequence of an always on display control method according to a related technology;
FIG. 8 is a schematic diagram of a time consumption situation of an always on display control method according to a related technology;
FIG. 9 is a schematic flowchart of an always on display control method according to an embodiment of this application;
FIG. 10 is a diagram of a time sequence of an always on display control method according to an embodiment of this application; and
FIG. 11 is a schematic diagram of a time consumption situation of an always on display control method according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application. Based on the embodiments of this application, all other embodiments obtained by a person of ordinary skill in the art without creative efforts fall within the protection scope of this application.

In this specification, the term "and/or" is an association relationship that describes associated objects, and indicates that three relationships may exist. For example, "A and/or B" may indicate the following three cases: only A exists, both A and B exist, and only B exists. The character "/" in this specification indicates an "or" relationship between associated objects. For example, "A/B" indicates A or B.

The terms "first", "second", and the like in the specification and the claims in this specification are used to distinguish between different objects, and are not used to describe a particular order of the objects. In the description of embodiments of this application, unless otherwise stated, "a plurality of" means two or more. For example, "a plurality of processing units" means two or more processing units, and "a plurality of elements" means two or more elements.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

With rapid development of electronic technologies, electronic devices such as a smartphone and a tablet computer are provided with increasing more functions, and have become indispensable tools in people's lives and work. By using a mobile phone as an example, a user often lights up a screen of the mobile phone to view information such as time and a notification. To facilitate the user to view basic information such as time, and reduce power consumption of the electronic device, an always on display function of the electronic device emerges.

An implementation principle of the always on display function is as follows: After the screen of the electronic device is turned off, some pixels of the screen may be lit up to display information such as a clock, a date, an electricity quantity, and a message reminder, while other pixels of the screen are always in a turn-off state. For example, the pixels in the turn-off state are presented in black, so that the user can conveniently view the foregoing information without lighting up the entire screen of the electronic device, thereby lowering power consumption of the electronic device. The electronic device usually enables the always on display function by default.

The electronic device may support the following two scenarios of triggering always on display:

Scenario 1: A screen is turned off due to timeout or the screen is turned off by pressing a power button, which can trigger the always on display.

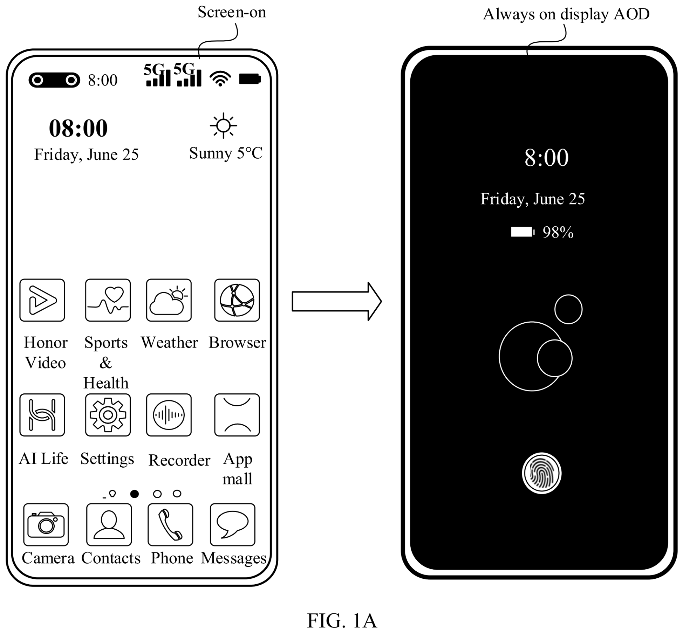

As shown in FIG. 1A, when the electronic device changes from screen-on to screen-off, the always on display is automatically triggered. To be specific, some pixels of the screen are lit up, and an always on pattern is displayed, for example, the always on pattern includes information such as a clock, a date, and a notification, which is convenient for a user to view the foregoing commonly used information, and can reduce power consumption of the electronic device. Then, after the always on pattern is displayed for a period of time (5 seconds), the always on pattern disappears automatically.

Scenario 2: A screen is touched in a screen-off state, which can trigger the always on display.

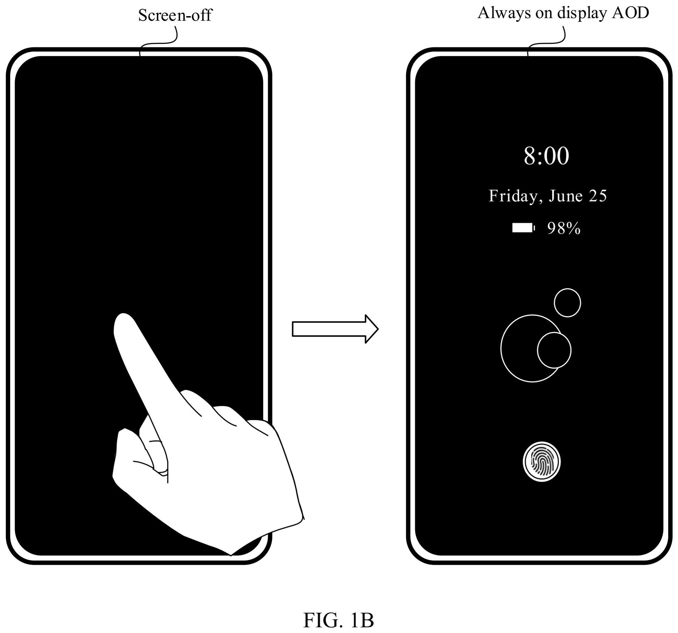

As shown in FIG. 1B, when the electronic device is in the screen-off state, if the user touches or single-taps a display screen, the always on display is triggered. To be specific, a partial area of the screen is lit up, and an always on pattern is displayed. Then, after being displayed for a period of time (5 seconds), the always on pattern disappears automatically. This manner of touching or single-tapping the screen in the screen-off state to trigger the always on display may be referred to as a "touch mode".

Currently, for the foregoing scenario 2, it takes a relatively long time for the electronic device to implement the always on display in the screen-off state, and there is a problem of an excessively long always on display delay. It should be noted that the problem of the excessively long always on display delay existing in the foregoing scenario 2 is mainly studied and improved in embodiments of this application.

The inventors of this application find through researching that a reason that the always on display currently takes a relatively long time in the screen-off state mainly includes: For a hardware requirement based on a screen IC chip specification, power-on and initialization of the display screen needs to take about 120 ms, and processing an always on display procedure by software needs to take about 150 ms. In this case, an overall always on display procedure takes a minimum of about 270 ms. Consequently, it takes a long time to enter the always on display, and a feeling that "the always on display is slow" is brought to the user.

To resolve a problem of slow always on display, an embodiment of this application provides an always on display control method. According to the solutions of this application, once a touchscreen driver receives a screen touching event in a screen-off state, the touchscreen driver immediately notifies a display driver to perform a power-on procedure, so that a display screen starts power-on and initialization in advance. Further, as in a related technology, the touchscreen driver transfers the screen touching event in the screen-off state to an AOD application, and the AOD application starts an always on display procedure. In this way, a power-on procedure of the display screen and an always on display start procedure can be implemented in parallel, and therefore, overall time consumption of the always on display procedure is greatly reduced. Therefore, when the user touches the display screen in the screen-off state, the always on display becomes faster, thereby improving user experience.

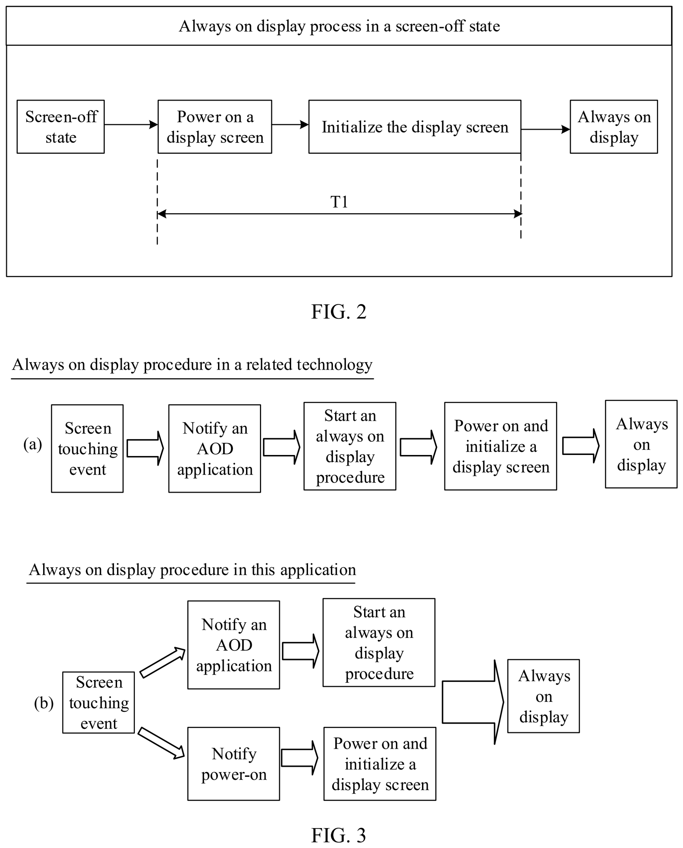

FIG. 2 is a schematic diagram of a status change of a display screen in an always on display process. As shown in FIG. 2, the display screen is in a screen-off state. When receiving a screen touching event, an electronic device starts an always on display procedure. The display screen is powered on and initialized first, and then the display screen displays an always on pattern, to implement always on display. It is specified in a protocol that power-on and initialization of the display screen need to take preset duration (denoted as T1). In other words, after the preset duration T1, the display screen completes initialization and is ready to perform a display task delivered by the display driver.

It should be noted that the display driver needs to wait for the preset duration T1, that is, wait until the display screen completes initialization, before returning a power-on completion message to an upper layer, to further complete the always on display. For example, the preset duration T1 may be 120 ms. The specified preset duration is described as an example. This may be specifically set based on an actual use requirement, and is not limited in this embodiment of this application.

In this embodiment of this application, a power-on instruction and an AOD display instruction are involved in the always on display procedure. The AOD display instruction is used to control a display screen to display an always on pattern. The power-on instruction is used to control a display screen to power on, and is specifically to control a display screen IC (also referred to as a display driver integrated circuit) to power on. In this case, "power-on of the display screen" actually refers to "power-on of the display screen IC". It may be understood that when the display screen IC is in a power-on state, the display screen IC may provide display content for the display screen, and the display screen IC may control, in response to the AOD display instruction, the display screen to display the always on pattern.

To better understand this embodiment of this application, the following provides brief descriptions with reference to FIG. 3 by comparing this embodiment of this application with a related technology.

(a) in FIG. 3 shows an always on display procedure in a screen-off state according to a related technology. As shown in (a) in FIG. 3, when a screen touching event in the screen-off state occurs, an AOD application is first notified of the screen touching event in the screen-off state, and then the AOD application starts the always on display procedure. Then, a display screen is powered on first, and then displays an always on pattern, to implement always on display.

(b) in FIG. 3 shows an always on display procedure in a screen-off state according to this application. As shown in (b) in FIG. 3, when a screen touching event in the screen-off state occurs, a display driver is immediately notified to perform a power-on procedure, and an AOD application is simultaneously notified to start the always on display procedure. In this way, a power-on procedure of the display screen and an always on display start procedure are performed in parallel, to complete always on display.

In comparison with the related technology, an improvement in the solutions of this application lies in that: After a touchscreen driver senses the screen touching event in the screen-off state, the touchscreen driver notifies the display driver to perform the power-on procedure. Simultaneously, the touchscreen driver transfers the screen touching event in the screen-off state to an input subsystem, and then the input subsystem transfers the screen touching event in the screen-off state to the AOD application, to start the always on display procedure.

In other words, after the touchscreen driver senses the screen touching event in the screen-off state, the touchscreen driver immediately notifies the display driver to perform the power-on procedure, and simultaneously notifies the AOD application to start the always on display procedure.

In comparison with the related technology, in the always on display procedure of this application, the display driver performs the power-on procedure in advance. It may be understood that, before the always on display procedure is started, the display driver has started to perform the power-on procedure. In addition, after the always on display procedure is started, the display driver has completed the power-on procedure or is about to complete the power-on procedure.

This has the beneficial effect that simultaneously performing the power-on procedure of the display screen and the always on display start procedure significantly shortens time consumption of the always on display.

It should be noted that the electronic device described in this application is an electronic device with a display screen and with an always on display function. For example, the electronic device may be a smart terminal such as a mobile phone, a tablet computer, or a smartwatch. A specific technology and a specific device form that are used by the electronic device are not limited herein. For ease of description, an example in which the electronic device is a mobile phone is used in the following embodiments.

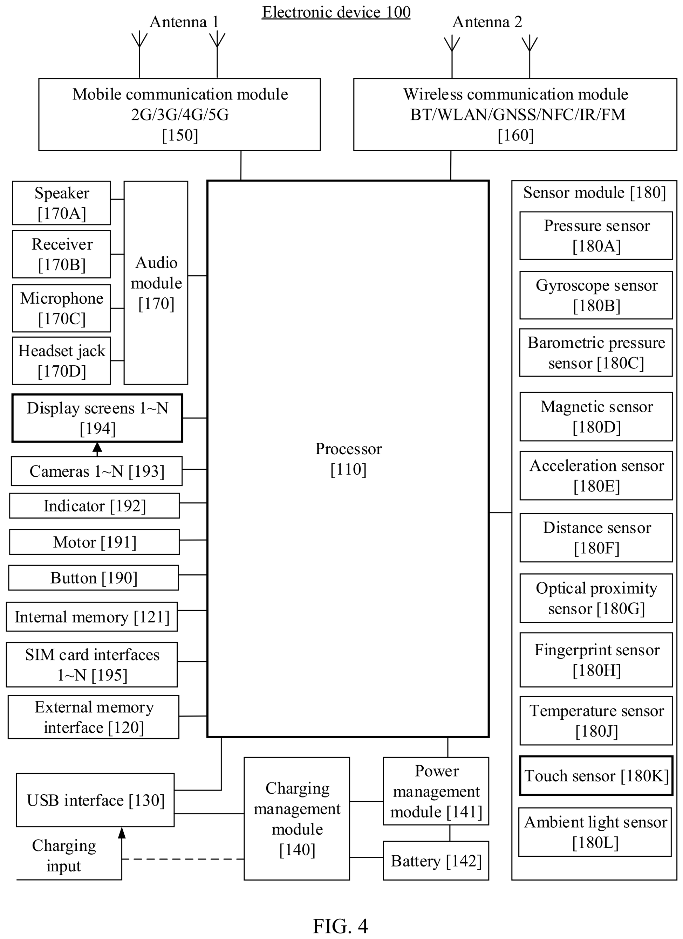

FIG. 4 is a schematic diagram of a structure of an electronic device according to an embodiment of this application. An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. For example, the processor 110 is configured to perform the always on display control method in embodiments of this application.

The controller may be a nerve center and a command center of the electronic device 100. The controller may generate an operation control signal based on instruction operation code and a time sequence signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

The external memory 120 is usually an external memory. In this embodiment of this application, the external memory is a memory other than a memory of the electronic device and a cache of the processor, and the memory is usually a nonvolatile memory.

The internal memory 121 may also be referred to as a "memory", and may be configured to store computer-executable program code, and the executable program code includes instructions. The internal memory 121 may include a program storage area and a data storage area. The program storage area may store an operating system, an application required by at least one function (for example, a sound playback function or an image playback function), and the like.

The display screen 194 is configured to display an image, a video, and the like. The display screen 194 includes a display panel. The display panel may use an organic light-emitting diode (organic light-emitting diode, OLED). In some embodiments, the electronic device 100 may include one or N display screens 194, where N is a positive integer greater than 1.

The touch sensor 180K is also referred to as a "touch panel" or a touchscreen sensor. The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided by using the display screen 194.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The button 190 includes a power button, and the power button is configured to trigger lighting up or turning off a display screen. For example, when the display screen is in a screen-on state, if a user presses the power button, a state of the display screen changes from the screen-on state to a screen-off state.

The foregoing specifically describes this embodiment of this application by using the electronic device 100 as an example. It should be understood that a structure shown in this embodiment of this application does not constitute a specific limitation on the electronic device 100. The electronic device 100 may have more or fewer components than those shown in the figure, or may combine two or more components, or may have different component configurations. Various components shown in the figure may be implemented in hardware, software, or a combination of hardware and software including one or more signal processing and/or applicationspecific integrated circuits.

In addition, an operating system runs on the foregoing components, for example, an iOS operating system developed by Apple Inc., an Android open-source operating system developed by Google Inc., or a Windows operating system developed by Microsoft Corporation. An application may be installed and run on the operating system.

An operating system of the electronic device 100 may use a layered architecture, an event-driven architecture, a microkernel architecture, a microservice architecture, or a cloud architecture. In embodiments of this application, an Android (Android) system with a layered architecture is used as an example to describe a software structure of the electronic device 100.

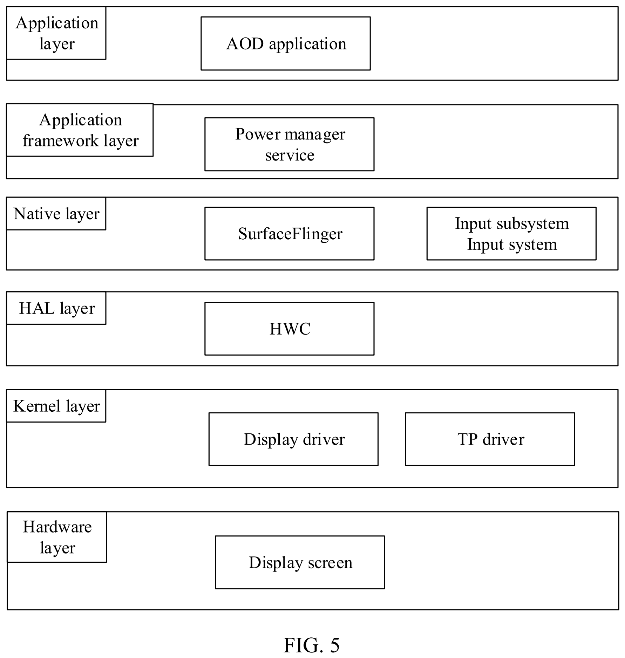

FIG. 5 is a block diagram of a software structure of an electronic device 100 according to an embodiment of this application.

In the layered architecture, software is divided into several layers, and each layer has a clear role and task. The layers communicate with each other through software interfaces. In some embodiments, the Android system is divided into five layers: an application (applications) layer, an application framework (application framework) layer, a system Native library (which is referred to as a Native layer), a hardware abstraction layer (hardware abstraction layer, HAL), and a kernel (kernel) layer from top to bottom. For ease of description, a hardware layer interacting with the foregoing software structure is further embodied in FIG. 5.

It should be noted that the Android system is a Linux-based operating system, and is mainly used for a portable device. Development of applications at an upper layer (for example, the application layer and the application framework layer) in the Android system is generally based on Java. Because it is not easy to implement some bottom-layer tasks by using Java, when tasks in terms of aspects such as a local service, a link library, or a hardware driver are involved, it is usually necessary to allow C programs to implement the tasks, and the C programs are run in the system Native library. The system Native library includes an interface for Java to invoke C++ code.

The application layer may include a series of application packages. For example, the application layer may include an AOD application and another application. This is not limited in this embodiment of this application.

The application framework layer provides an application programming interface (application programming interface, API) and a programming framework for an application at the application layer. The application framework layer includes some predefined functions. This is not limited in this embodiment of this application.

For example, the application framework layer may include a power manager service (power manager service, PMS) module. The power manager service module is configured to manage power-on and power-off of the display screen.

For example, the application framework layer may further include an AOD service module, and the AOD service module is configured to provide an always on display service for the AOD application.

For example, the application framework layer may further include a drawing module. The drawing module is configured to provide an always on pattern used for always on display.

The Native layer may include a plurality of functional modules. For example, in the solutions of this application, the Native layer includes a surface drawing (SurfaceFlinger) service module. A function of the SurfaceFlinger service module is to accept graphical display data from a plurality of sources, synthesize the data, and then send the data to a display device. Image display may be specifically completed in a collaborative way by a plurality of categories, such as the SurfaceFlinger, an HWC, and the display screen.

In the solutions of this application, the Native layer further includes an input subsystem (input system). The input subsystem is one of important system services in the Android operating system, and is dedicated to processing various external input signals of input devices. The input devices include a display screen, a keyboard, a mouse, and the like. For example, a user input is to touch a display screen. After the display screen is touched, a corresponding hardware driver (for example, a touchscreen driver at the kernel layer) is triggered. After the touchscreen driver receives a screen touching event, the touchscreen driver writes the screen touching event into a corresponding input device node. Then, an input system reads the screen touching event from the device node, transfers the screen touching event upward layer by layer, and continues to transfer the screen touching event to a corresponding activity (Activity).

The HAL layer may include a hardware composer (hwcomposer, HWC). The HWC has a function or a capability of combining and displaying image data by using hardware, and provides hardware support for a SurfaceFlinger service.

The kernel layer is a layer between hardware and software, and functions to transfer a request of an application to the hardware. The kernel layer provides a most basic function of the operating system. Usually, the kernel layer provides system services such as process management, an interruption response, memory management, and communication between a network and a process.

In the solutions of this application, the kernel layer includes a display driver. The display driver may be combined with a display screen integrated circuit (integrated circuit, IC) or a chip to control a display function of the display screen together. For example, the display driver and the display screen IC implement an always on display function together in a manner of combining software and hardware. The display driver may be further configured to set a backlight parameter of the display screen. When the backlight parameter of the display screen is set to 0, the display screen is in a screen-off state. When the backlight parameter of the display screen is set to any value in a range of [1, 255], the display screen is in a screen-on state.

In the solutions of this application, the kernel layer further includes a touchscreen (touch panel, TP) driver. In the solutions of this application, the TP driver is configured to receive the screen touching event sent by the touchscreen sensor of the display screen, report the screen touching event to the input subsystem, and transfer the screen touching event to the display driver, to trigger the display driver to perform a power-on procedure.

The hardware layer may include a display screen (for example, an OLED or an LCD), and an IC is correspondingly disposed on the display screen, which is also referred to as a display screen IC. The hardware layer further includes the touchscreen sensor. When the user single-taps or touches the display screen, the touchscreen sensor of the display screen may sense a screen touching operation of the user, and determine that a screen touching event exists. The touchscreen sensor of the display screen may send the screen touching event to the TP driver.

It should be noted that although the Android system is used as an example for description in this embodiment of this application, a basic principle thereof is also applicable to an electronic device based on an operating system such as iOS or Windows.

An execution body of the always on display control method provided in the embodiments of this application may be the foregoing electronic device, or may be a functional module and/or a functional entity in the electronic device that is capable of implementing the always on display control method. In addition, the solutions of this application may be implemented in a hardware and/or software manner. The specific manner may be determined based on an actual use requirement. This is not limited in the embodiments of this application. By using the electronic device as an example, the following provides, with reference to the accompanying drawings, example descriptions for the always on display control method provided in the embodiments of this application.

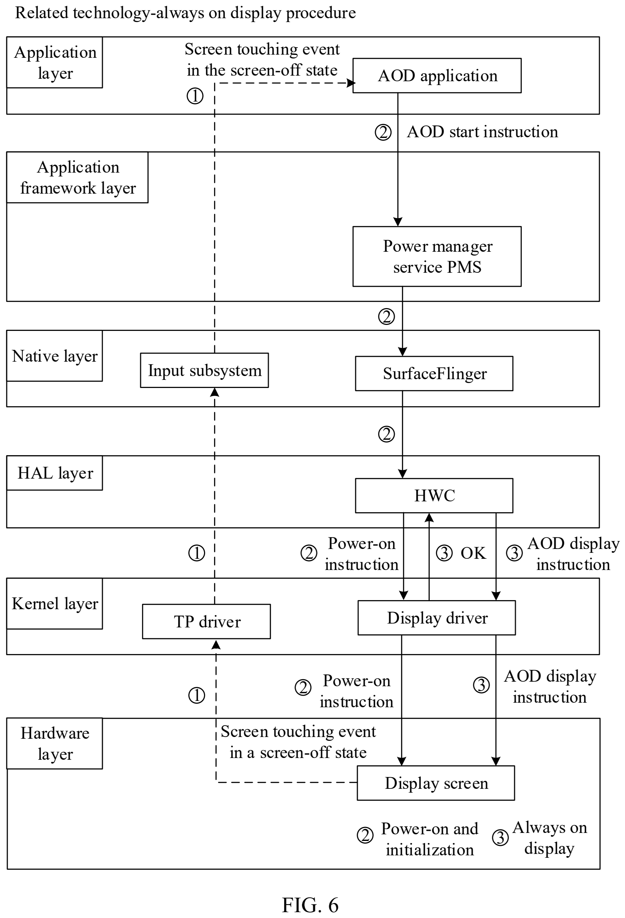

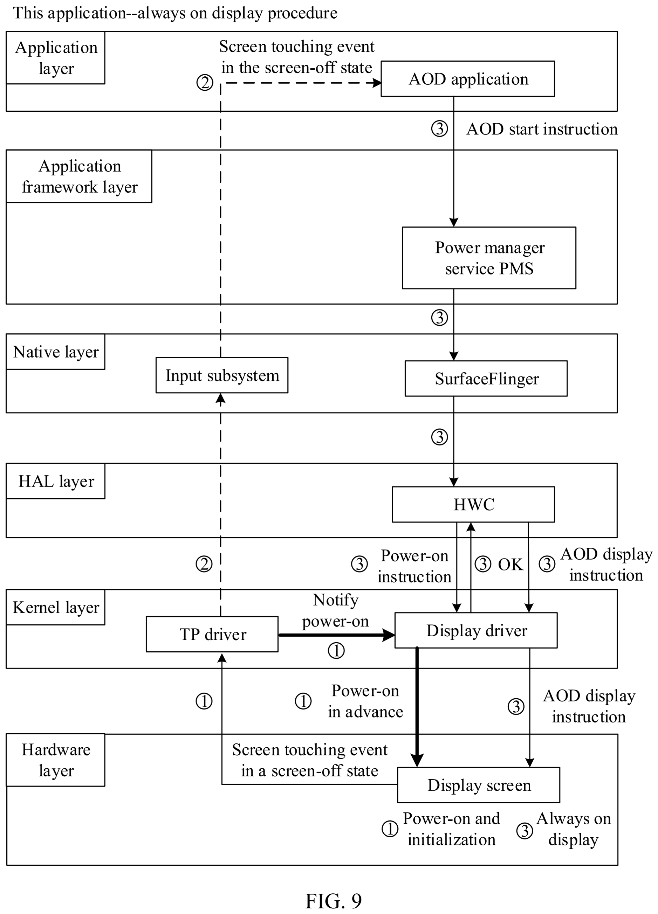

To highlight improvements of the embodiments of this application relative to a related technology, the following compares the solutions of this application with the related technology in terms of aspects such as an always on display procedure, a time sequence diagram, and a time consumption situation in a screen-off state, and describes the improvements. With reference to FIG. 6 to FIG. 8, an always on display procedure, a time sequence diagram, and a time consumption situation in the related technology are first described. Then, with reference to FIG. 9 to FIG. 11, the always on display control method provided in the embodiments of this application is described in terms of aspects such as an always on display procedure, a time sequence diagram, and a time consumption situation.

### Related technology-always on display procedure

FIG. 6 is a schematic diagram of a software architecture of an always on display procedure in a screen-off state according to a related technology. The always on display procedure in the screen-off state may be divided into two phases: a first phase, namely, a procedure of transferring a screen touching event; and a second phase, namely, a procedure of starting and completing always on display. For the procedure of transferring the screen touching event, refer to a direction shown in a dashed-line arrow. For starting and completing the always on display, refer to a direction shown in a solid line arrow.

### First phase: The procedure of transferring the screen touching event

Referring to ① shown in FIG. 6, when an electronic device is in a screen-off state, if a user single-taps or touches a display screen, a TP driver of the electronic device receives an operation of single-tapping or touching the display screen by the user, that is, the TP driver senses a screen touching event in the screen-off state. The TP driver transfers the screen touching event in the screen-off state to an input subsystem, and then the input subsystem transfers the screen touching event in the screen-off state to an AOD application.

### Second phase: The procedure of starting and completing the always on display

After receiving the screen touching event in the screen-off state, the AOD application starts an always on display procedure.

It should be noted that, when the electronic device is in the screen-off state, a display screen IC is in a power-off state. When the always on display procedure is started, power-on of the display screen IC needs to be triggered first, and then the display screen IC controls the display screen to display an always on pattern.

Referring to ② shown in FIG. 6, the AOD application delivers an AOD start instruction, and the AOD start instruction includes a power-on instruction and an AOD display instruction. The AOD start instruction is transparently transmitted through a power manager service module and a SurfaceFlinger service module in the software architecture sequentially, and then reaches an HWC. The HWC first delivers the power-on instruction to a display driver, and correspondingly, the display driver triggers power-on of the display screen IC in response to the power-on instruction. Then, referring to ③ shown in FIG. 6, the display driver returns an OK message to the HWC. After the HWC receives the OK message, the HWC delivers the AOD display instruction to the display driver. The display driver sends the AOD display instruction to the display screen IC. In response to the AOD display instruction, the display screen IC controls the display screen to display the always on pattern, to complete the always on display.

It may be learned from FIG. 6 that, in a process of the always on display procedure in the screen-off state, according to the related technology, the screen touching event in the screen-off state needs to be first transferred to the AOD application, and then the AOD application starts the always on display procedure. In an AOD implementation process, power-on of the display screen needs to be triggered first, and then the display screen is triggered to display the always on pattern, to complete the always on display.

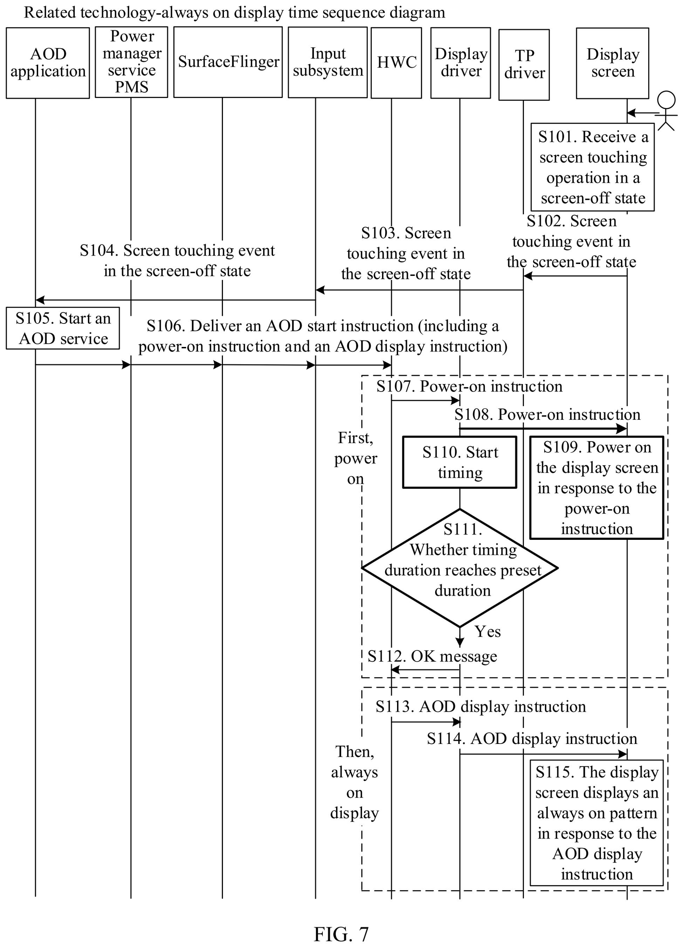

On a basis of FIG. 6, FIG. 7 is a schematic diagram of a time sequence of an always on display procedure in a screen-off state according to a related technology. As shown in FIG. 7, the method includes the following steps S101-S115.

S101. When the display screen is in a screen-off state, the display screen receives a screen touching operation.

In actual implementation, when the user touches or single-taps the display screen, a touch sensor disposed on the display screen may sense the screen touching operation of the user.

An event that the display screen is touched or single-tapped in the screen-off state may be referred to as the screen touching event in the screen-off state.

S102. The display screen reports the screen touching event in the screen-off state to the TP driver.

S103. The TP driver transfers the screen touching event in the screen-off state to the input subsystem.

S104. The input subsystem transfers the screen touching event in the screen-off state to the AOD application.

In actual implementation, after the display screen is touched, the TP driver at a corresponding kernel layer is triggered. After the TP driver receives the screen touching event, the TP driver writes the screen touching event into a corresponding input device node. Then, an input system reads the screen touching event from the device node, and transfers the screen touching event upward layer by layer.

S105. In response to the screen touching event in the screen-off state, the AOD application starts, and triggers an AOD service to start.

After the AOD application and AOD service start, the always on display procedure may be started.

S106. The AOD application delivers the AOD start instruction to the power manager service module. The AOD start instruction is transparently transmitted through the power manager service module and the SurfaceFlinger service module sequentially, and reaches the HWC.

The AOD start instruction includes the power-on instruction and the AOD display instruction.

The following S107-S112 describe a process of powering on the display screen.

S107. The HWC sends the power-on instruction to the display driver in response to the AOD start instruction, where the power-on instruction is used to control the display screen IC to power on.

S108. The display driver sends the power-on instruction to the display screen, to drive the display screen to power on.

S109. Power on the display screen in response to the power-on instruction.

In actual implementation, the display driver delivers the power-on instruction to the display screen IC, and then the display screen IC is powered on in response to the power-on instruction.

S110. The display driver starts timing when sending the power-on instruction to the display screen.

In actual implementation, it usually takes preset duration for the display screen to power on, for example, the preset duration may be 120 ms.

S111. The display driver determines whether timing duration reaches the preset duration.

If the timing duration reaches (that is, is greater than or equal to) the preset duration, the following S112 continues to be performed.

If the timing duration does not reach (that is, is less than) the preset duration, the display driver waits until the timing duration reaches the preset duration, and then performs the following S112.

S112. The display driver returns a complete (OK) message to the HWC.

The following S113-S115 describe a process in which the display screen completes the always on display.

S113. After receiving the OK message, the HWC sends the AOD display instruction to the display driver.

S114. The display driver sends the AOD display instruction to the display screen, to drive the display screen to display the always on pattern.

S115. The display screen displays the always on pattern in response to the AOD display instruction.

In response to the AOD display instruction, the display screen IC first obtains an always on image, and then controls the display screen to display the always on pattern, to complete the always on display procedure.

It may be learned from FIG. 7 that, in a process of the always on display procedure in the screen-off state, according to the related technology, the screen touching event in the screen-off state needs to be first transferred to the AOD application, and then the AOD application starts the always on display procedure. Then, the display screen is powered on. After power-on of the display screen is complete, the display screen then displays the always on pattern, to complete the always on display.

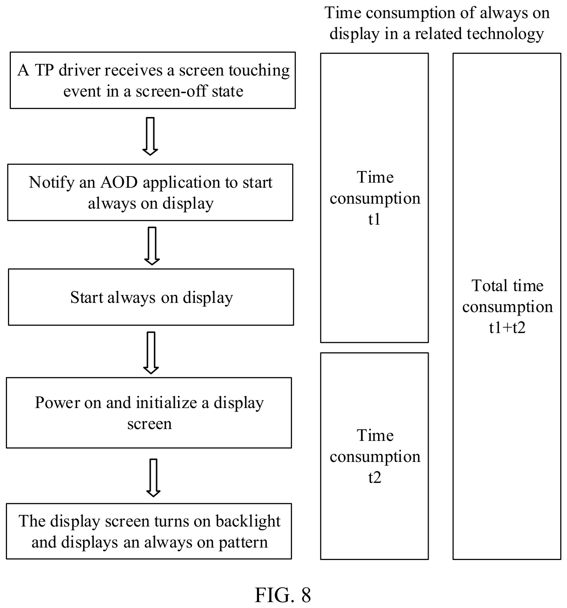

The foregoing respectively describes, by using FIG. 6 and FIG. 7, the always on display procedure and the time sequence diagram in the screen-off state in the related technology. The following analyzes an AOD time consuming situation in the screen-off state in the related technology with reference to FIG. 8.

As shown in FIG. 8, in the related technology, when the display screen is in the screen-off state, if the user taps or touches the display screen of the electronic device, the TP driver of the electronic device receives the screen touching event in the screen-off state, and the TP driver notifies the AOD application to start the always on display procedure. Then, the AOD application starts the always on display procedure: The display screen is powered on first, and then the display screen displays the always on pattern, to complete the always on display procedure. It may be learned from analysis that, in the always on display procedure, an upper-layer software module first processes a service of the always on display procedure, and then the upper-layer software module delivers an instruction to display screen hardware. The display screen hardware implements power-on of the display screen and the always on display based on the instruction delivered by the upper-layer software module.

In other words, the always on display procedure includes time consumption of an always on display start procedure and time consumption of a power-on procedure of the display screen. For example, the time consumption of the always on display start procedure is denoted as t1, the time consumption of the power-on procedure of the display screen is t2, and overall time consumption is t1+t2.

In actual implementation, a procedure of triggering the always on display by using a touch mode usually takes more than 270 ms. It takes about 150 ms for the software module to process the AOD service. It takes about 120 ms for display screen IC hardware to power on.

For the always on display procedure in the related technology, there is a problem that implementation of the always on display is slow.

### This application-always on display procedure

For a problem that the always on display procedure in the screen-off state takes a long time in the foregoing related technology, an improvement is made in a process in an embodiment of this application. Once a TP driver receives a screen touching event in a screen-off state, the TP driver immediately notifies a display driver to perform a power-on procedure, so that a display screen starts power-on and initialization in advance. Further, as in the related technology, the TP driver transfers the screen touching event in the screen-off state to an AOD application, and the AOD application starts the always on display procedure. In this way, the power-on procedure of the display screen and an always on display start procedure can be implemented in parallel, and therefore, overall time consumption of the always on display procedure is greatly reduced. Therefore, when a user touches the display screen in the screen-off state, always on display becomes faster, thereby improving user experience.

In this embodiment of this application, the always on display procedure includes the always on display start procedure and the power-on procedure of the display screen. The always on display start procedure includes a process in which the AOD application delivers a power-on instruction and an AOD display instruction, and a process in which operations are performed based on the power-on instruction and the AOD display instruction. The power-on procedure of the display screen includes a process in which an upper layer notifies the display screen to power on, and a process in which the display screen is powered on and initialized.

For ease of description, the power-on instruction and the AOD display instruction may be collectively referred to as an AOD start instruction. The AOD display instruction may include an always on pattern and an AOD backlight parameter.

FIG. 9 is a schematic diagram of a software architecture of an always on display procedure in a screen-off state according to an embodiment of this application. The always on display procedure in the screen-off state may be divided into two phases: a first phase, where the TP driver notifies the display driver to perform the power-on procedure and notifies the AOD application to start the always on display procedure; and a second phase, where the display driver performs the power-on procedure and the AOD application starts the always on display procedure.

**First phase: The TP driver notifies the display driver to perform the power-on procedure and notifies the AOD application to start the always on display procedure**

Referring to a direction indicated by ① with a thin solid line arrow in FIG. 9, when an electronic device is in a screen-off state, if the user single-taps or touches the display screen, the TP driver of the electronic device receives an operation of single-tapping or touching the display screen by the user, that is, the TP driver senses the screen touching event in the screen-off state.

Different from the related technical procedure shown in FIG. 6, in this embodiment of this application, after the TP driver senses the screen touching event in the screen-off state, the TP driver performs the following actions:

On the one hand, referring to a direction indicated by ① with a thick solid line arrow in FIG. 9, the TP driver notifies the display driver to perform the power-on procedure. Correspondingly, the display driver triggers power-on and initialization of the display screen. In comparison with the related technology, the display driver performs the power-on procedure in advance.

On the other hand, referring to a direction indicated by ② with a dashed-line arrow in FIG. 9, the TP driver transfers the screen touching event in the screen-off state to an input subsystem, and then the input subsystem transfers the screen touching event in the screen-off state to the AOD application.

In other words, after the TP driver senses the screen touching event in the screen-off state, the TP driver notifies the AOD application to start the always on display procedure, and further notifies the display driver to perform the power-on procedure, so that the display driver performs the power-on procedure before receiving the power-on instruction delivered by the AOD application.

In comparison with that in the related technology, the TP driver transfers the screen touching event in the screen-off state to the AOD application, the AOD application starts the always on display procedure, and then the display driver performs the power-on procedure, in the solutions of this application, when the TP driver senses the screen touching event in the screen-off state, the TP driver can immediately notify the display driver to perform the power-on procedure. In this way, the power-on procedure of the display screen and the always on display start procedure are implemented in parallel, thereby reducing time consumption of always on display.

**Second phase: The display driver performs the power-on procedure and the AOD application starts the always on display procedure**

In this embodiment of this application, while the display driver performs the power-on procedure, the TP driver transfers the screen touching event in the screen-off state to the AOD application, and then the AOD application starts the always on display procedure. In this way, the always on display start procedure and the power-on procedure of the display screen are performed in parallel, to reduce time consumption.

Referring to a direction indicated by ③ with a thin solid line arrow in FIG. 9, in response to the screen touching event in the screen-off state, the AOD application delivers the AOD start instruction to a lower layer, and the AOD start instruction includes the power-on instruction and the AOD display instruction. The AOD start instruction sequentially passes through a power manager service module and a SurfaceFlinger service module in the software architecture, and then reaches an HWC. The HWC first delivers the power-on instruction to the display driver. In this case, because the display screen has completed power-on or is about to complete power-on, the display driver does not need to trigger power-on of the display screen.

When the display screen has completed power-on, the display driver directly returns an OK message to the HWC. Alternatively, when the display screen is about to complete power-on, the display driver waits for the display screen to complete power-on, and then returns the OK message to the HWC.

After the HWC receives the OK message returned by the display driver, the HWC sends the AOD display instruction to the display driver, and then the display driver sends the AOD display instruction to the display screen. The display screen displays an always on pattern in response to the AOD display instruction.

Different from the related technical procedure shown in FIG. 6, in the solutions of this application, before the always on display procedure is started, the display driver has started to perform the power-on procedure. In addition, after the always on display procedure is started, the display driver has completed the power-on procedure or is about to complete the power-on procedure. In this way, time consumption of the always on display is significantly shortened by performing the power-on procedure of the display screen and the always on display start procedure in parallel.

For example, in the related technology, it takes about 150 ms for a software module to process an AOD service, and based on a hardware requirement of a screen chip specification, a time required for power-on of the display screen is about 120 ms. Because in this application, the power-on procedure of the display screen and the always on display start procedure can be performed in parallel, total time consumption of the AOD is less than 270 ms. Therefore, in this application, a time required for completing the always on display in the screen-off state is reduced.

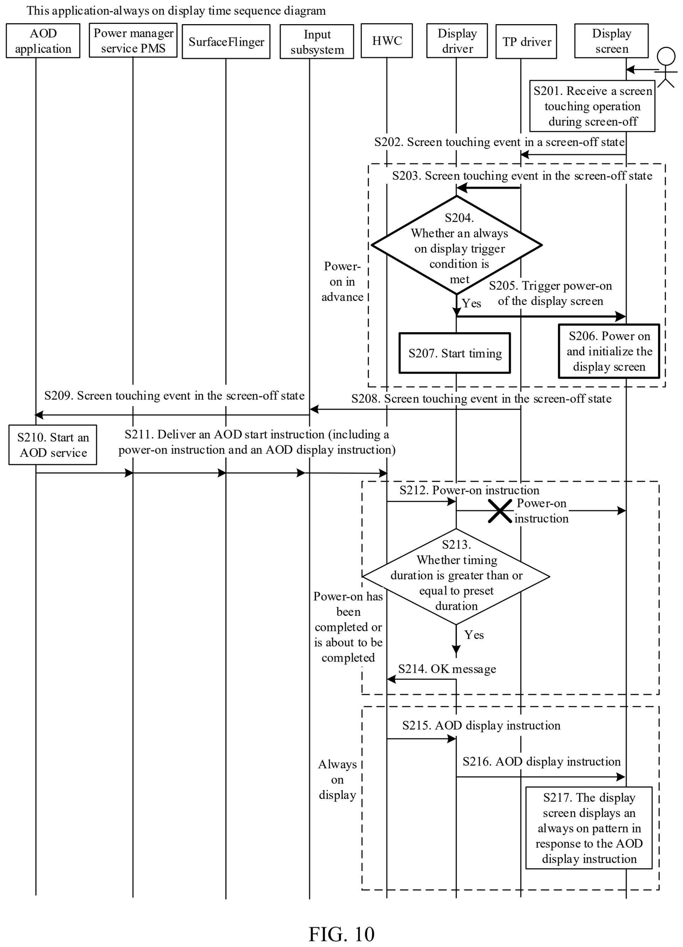

On a basis of FIG. 9, FIG. 10 is a schematic diagram of a time sequence of an always on display procedure in a screen-off state according to an embodiment of this application. As shown in FIG. 10, the method includes the following steps S201-S217.

S201. When the display screen is in the screen-off state, the display screen receives a screen touching operation.

It should be noted that a touchscreen sensor is disposed on the display screen. The touchscreen sensor and the display screen form a touch control screen. The touchscreen sensor is configured to detect a touch operation performed on or near the touchscreen sensor. The touchscreen sensor may transfer the detected touch operation to an application processor to determine a type of a touch event. Correspondingly, a visual output related to the touch operation may be provided by using the display screen.

The screen touching operation may be referred to as a screen touching operation in a screen-off state. An event corresponding to the screen touching operation may be referred to as a screen touching event in a screen-off state.

S202. The display screen reports the screen touching event in the screen-off state to the TP driver.

It should be noted that, compared with the time sequence diagram in the related technology shown in FIG. 7, the time sequence diagram in this embodiment of this application shown in FIG. 10 mainly differs in S203-S207 (in which power-on is performed in advance) and S212-S214 (in which power-on has been completed or is to be completed) shown in dashed-line boxes in FIG. 10

The following first describes a procedure of power-on in advance in this application with reference to S203-S207.

S203. The TP driver transfers the screen touching event in the screen-off state to the display driver.

S204. The display driver determines, based on the screen touching event in the screen-off state, whether an always on display trigger condition is met.

The always on display trigger condition may include: The electronic device has enabled an always on display function, the display screen is in the screen-off state, and a user input operation is a preset screen touching operation.

It should be noted that a manner in which the TP driver notifies the display driver to perform the power-on procedure may be any one of the following manners:

Manner 1: The TP driver transfers the screen touching event in the screen-off state to the display driver, and the display driver determines whether the screen touching event meets the always on display trigger condition. If the screen touching event in the screen-off state meets the always on display trigger condition, the display driver performs the power-on procedure. If the screen touching event in the screen-off state does not meet the always on display trigger condition, the display driver does not perform the power-on procedure.

Manner 2: The TP driver determines, based on the screen touching event in the screen-off state, whether the always on display trigger condition is met. If the screen touching event in the screen-off state meets the always on display trigger condition, the TP driver transfers the screen touching event to the display driver, to trigger the display driver to perform the power-on procedure. If the screen touching event in the screen-off state does not meet the always on display trigger condition, the TP driver does not transfer the screen touching event to the display driver.

Manner 3: The TP driver determines, based on the screen touching event in the screen-off state, whether the always on display trigger condition is met. If the screen touching event in the screen-off state meets the always on display trigger condition, the TP driver notifies the display driver to perform the power-on procedure, to trigger the display driver to perform the power-on procedure. If the screen touching event in the screen-off state does not meet the always on display trigger condition, the TP driver does not notify the display driver to perform the power-on procedure.

For ease of description, FIG. 10 is described by using Manner 1 as an example. In actual implementation, any one of the foregoing manners may be used to implement that the TP drive notifies the display driver to perform the power-on procedure.

S205. The display driver performs the power-on procedure, that is, the display driver triggers power-on of the display screen.

S206. Power on and initialize the display screen.

In actual implementation, the display driver triggers power-on and initialization of a display screen IC.

S207. The display driver starts timing from a moment at which power-on of the display screen is triggered.

S208. The TP driver transfers the screen touching event in the screen-off state to the input subsystem.

In some embodiments, a moment at which a touchscreen driver transfers the screen touching event to the display driver is earlier than a moment at which the touchscreen driver transfers the screen touching event to the input subsystem.

In some other embodiments, a moment at which the touchscreen driver transfers the screen touching event to the display driver is equal to a moment at which the touchscreen driver transfers the screen touching event to the input subsystem.

S209. The input subsystem transfers the screen touching event in the screen-off state to the AOD application.

In actual implementation, after the display screen is touched, the TP driver at a corresponding kernel layer is triggered. After the TP driver receives the screen touching event, the TP driver writes the screen touching event into a corresponding input device node. Then, an input system reads the screen touching event from the device node, and transfers the screen touching event upward layer by layer.

S210. In response to the screen touching event in the screen-off state, the AOD application starts, and triggers an AOD service to start.

After the AOD application and AOD service start, the always on display procedure may be started.

S211. The AOD application delivers the AOD start instruction to the power manager service module. The AOD start instruction is transparently transmitted through the power manager service module and the SurfaceFlinger service module sequentially, and reaches the HWC.

The AOD start instruction includes the power-on instruction and the AOD display instruction.

The following S212-S214 describe an AOD processing policy when power-on is performed in advance in this application.

S212. The HWC sends the power-on instruction to the display driver in response to the AOD start instruction, where the power-on instruction is used to control the display screen IC to power on.

S213. In response to the power-on instruction, the display driver determines whether timing duration is greater than or equal to preset duration.

In comparison with the related technology, in this application, the power-on procedure has been performed in advance. After the display driver receives the power-on instruction, the display driver does not send the power-on instruction to the display screen (as shown by × in FIG. 10), but determines whether the display screen completes power-on and initialization. In actual implementation, it usually takes preset duration for the display screen to power on and initialize, for example, the preset duration may be 120 ms.

If the timing duration is greater than or equal to the preset duration, it indicates that the display screen has completed power-on and initialization, and the following S214 continues to be performed, that is, the TP driver returns the OK message to the HWC.

If the timing duration is less than the preset duration, it indicates that the display screen does not complete power-on and initialization, and the display driver waits until the timing duration reaches the preset duration, and then performs the following S214.

S214. The display driver returns the OK message to the HWC.

The following S215-S217 describe a process of implementing the always on display.

S215. After receiving the OK message, the HWC sends the AOD display instruction to the display driver.

S216. The display driver sends the AOD display instruction to the display screen, to drive the display screen to display the always on pattern.

The AOD display instruction may include the always on pattern.

S217. The display screen displays the always on pattern in response to the AOD display instruction.

In actual implementation, in response to the AOD display instruction, the display screen IC controls the display screen to display the always on pattern, to complete the always on display procedure.

In some embodiments, the AOD display instruction further includes the AOD backlight parameter. It should be noted that, in actual implementation, the upper layer first delivers the always on pattern to the display screen, and then delivers the AOD backlight parameter to the display screen. In actual implementation, in response to the AOD display instruction, the display screen IC controls the display screen to enable backlight based on the AOD backlight parameter and display the always on pattern, to complete the always on display procedure.

A solution of the related technology is as follows: In the always on display procedure, the screen touching event in the screen-off state is first transferred to the AOD application, and then the AOD application starts the always on display procedure. The upper-layer software module processes the always on display service, and then the upper-layer software module delivers an instruction to display screen hardware. The display screen hardware first completes power-on of the display screen based on the instruction delivered by the upper-layer software module, and then implements the always on display.

In comparison with the related technology, in this embodiment of this application, when the TP driver receives the screen touching event in the screen-off state, the TP driver can immediately notify the display driver to perform the power-on procedure, so that the display screen starts power-on and initialization in advance. Simultaneously, the TP driver transfers the screen touching event in the screen-off state to the AOD application, and the AOD application starts the always on display procedure. In this way, the power-on procedure of the display screen and the always on display start procedure can be implemented in parallel, thereby greatly reducing a time for completing the always on display in the screen-off state.

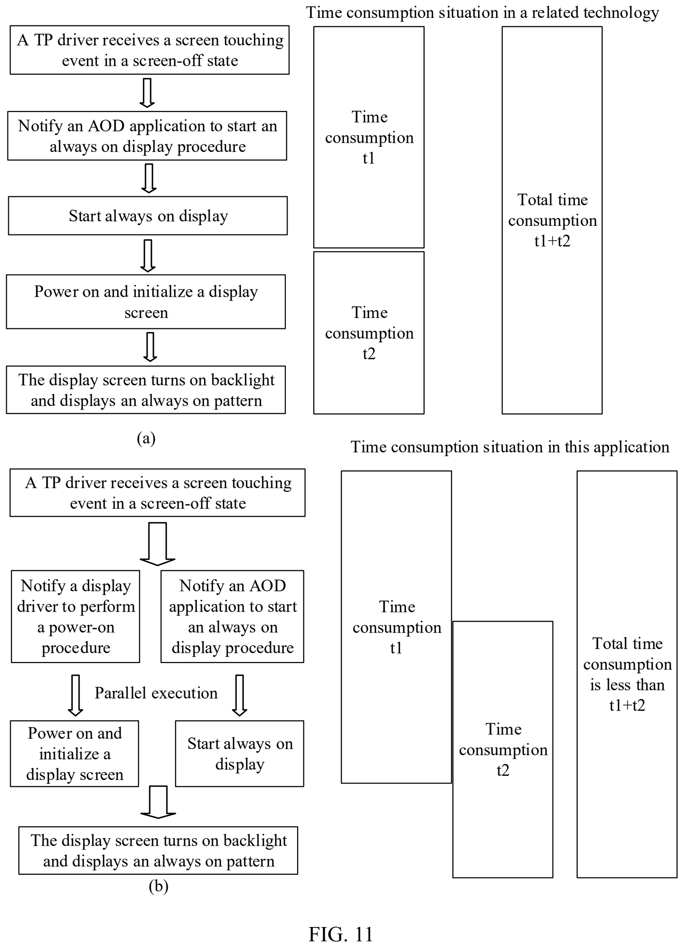

The foregoing respectively describes, by using FIG. 9 and FIG. 10, the always on display procedure and the time sequence diagram in the screen-off state in this embodiment of this application. The following analyzes an AOD time consuming situation in the screen-off state in this embodiment of this application with reference to FIG. 11.

As shown in (a) in FIG. 11, in the related technology, when the display screen is in the screen-off state, if the user taps or touches the display screen of the electronic device, the TP driver receives the screen touching event in the screen-off state, and the TP driver first notifies the AOD application to start the always on display procedure. Then, the AOD application starts the always on display procedure: The display screen is powered on first, and then the display screen displays the always on pattern, to complete the always on display procedure. The always on display procedure includes time consumption t1 of the always on display start procedure and time consumption t2 of the power-on procedure of the display screen, and overall time consumption is t1+t2.

As shown in (b) in FIG. 11, when the display screen is in the screen-off state, if the user taps or touches the display screen of the electronic device, the TP driver receives the screen touching event in the screen-off state. Relative to the related technology, an improvement of this application lies in that the power-on procedure of the display screen and the always on display start procedure are performed in parallel.

The TP driver immediately notifies the display driver to perform the power-on procedure, so that the display screen starts power-on and initialization in advance. Simultaneously, the TP driver transfers the screen touching event in the screen-off state to the AOD application, to notify the AOD application to start the always on display procedure.

Therefore, when the display screen is powered on and initialized, the AOD application starts the always on display procedure. After the display screen completes power-on and initialization, the display screen displays the always on pattern, to complete the always on display procedure.

In this application, the always on display procedure includes the time consumption t1 of the always on display start procedure and the time consumption t2 of the power-on procedure of the display screen. Because the power-on procedure of the display screen and the always on display start procedure can be performed in parallel, overall time consumption is less than t1+t2. Therefore, the solutions in this application reduce a time for completing the always on display in the screen-off state.

In actual implementation, based on the hardware requirement of the screen IC chip specification, power-on and initialization of the display screen need to take about 120 ms (namely, t2), and processing the always on display procedure by software needs to take about 150 ms (namely, t1). In this case, an overall AOD procedure takes a minimum of about 270 ms. According to the solutions of this application, because the power-on procedure of the display screen and the always on display start procedure can be performed in parallel, for example, time consumption of 120 ms can be reduced when the always on display procedure is implemented in the screen-off state, overall time consumption is 150 ms. It can be seen that the overall time consumption is significantly shortened. Therefore, when the user touches the display screen in the screen-off state, the always on display becomes faster, thereby improving user experience.

According to the solutions of this application, once the touchscreen driver receives the screen touching event in the screen-off state, the touchscreen driver immediately notifies the display driver to perform the power-on procedure, so that the display screen starts power-on and initialization in advance. Further, as in the related technology, the touchscreen driver transfers the screen touching event in the screen-off state to the AOD application, and the AOD application starts the always on display procedure. In this way, the power-on procedure of the display screen and the always on display start procedure can be implemented in parallel, and therefore, overall time consumption of the always on display procedure is greatly reduced. Therefore, when the user touches the display screen in the screen-off state, the always on display becomes faster, thereby improving user experience.

In another possible implementation, when the touchscreen driver receives the screen touching event in the screen-off state, the touchscreen driver immediately notifies the display driver to perform the power-on procedure of the display screen, so that the display screen starts power-on in advance. Time consumption of power-on is approximately within a range of [20 ms, 50 ms]. Simultaneously, the touchscreen driver transfers the screen touching event in the screen-off state to the AOD application. The AOD application starts the always on display procedure: The AOD application delivers the AOD start instruction to the display screen, and the AOD start instruction may carry an initialization parameter of the display screen. When the display screen receives the initialization parameter of the display screen, because the display screen has completed power-on in advance, the display screen can quickly enter initialization. In this case, some time consumption can also be reduced, so that the always on display becomes faster.

In the solutions of this application, an improvement is performed on a software system of the mobile phone, to shorten a time consumed by implementing the always on display in the screen-off state. When the user single-taps or touches the display screen of the electronic device in the screen-off state, the electronic device can quickly display the always on pattern by using the always on display control method provided in this application, thereby improving user experience. An optimization solution of always on display performance described in this embodiment of this application can support all current products and adapt to all domestic and overseas versions, and has universality and versatility.

It should be noted that in the embodiments of this application, "greater than" may be replaced with "greater than or equal to", and "less than or equal to" may be replaced with "less than"; or "greater than or equal to" may be replaced with "greater than", and "less than" may be replaced with "less than or equal to".

The embodiments described in this specification may be independent solutions, or may be combined based on internal logic. These solutions all fall within the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions, and when the computer instructions are run on an electronic device, the electronic device is enabled to perform the foregoing related method steps to implement the always on display control method in the foregoing embodiments.

An embodiment further provides a computer program product. The computer-readable storage medium stores program code. When the computer program product runs on a computer, the computer is enabled to perform the foregoing related steps to implement the always on display control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the always on display control method in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

In the several embodiments provided in this application, it should be understood that the disclosed apparatus and method may be implemented in another manner. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. An always on display control method, wherein the method is applied to an electronic device, the electronic device comprises a processor and a display screen, the processor comprises an always on display AOD application, a display driver, and a touchscreen driver, and the method comprises:
when the display screen is in a screen-off state, receiving, by the display driver, a screen touching event transferred by the touchscreen driver, wherein the screen touching event is a preset screen touching operation of a user on the display screen;
triggering, by the display driver, power-on and initialization of the display screen in response to the screen touching event;
starting, by the display driver, timing from a moment at which power-on of the display screen is triggered;
receiving, by the display driver, a power-on instruction from the AOD application;
in response to the power-on instruction, determining, by the display driver, whether timing duration is greater than or equal to preset duration;
when the timing duration is greater than or equal to the preset duration, returning, by the display driver, a completion message; or when the timing duration is less than the preset duration, waiting, by the display driver, until the timing duration is greater than or equal to the preset duration, and returning the completion message;
receiving, by the display driver, an AOD display instruction from the AOD application; and
triggering, by the display driver in response to the AOD display instruction, the display screen to display an always on pattern.

2. The method according to claim 1, wherein the triggering, by the display driver, power-on and initialization of the display screen in response to the screen touching event comprises:
determining, by the display driver, that the screen touching event meets an always on display trigger condition; and
triggering, by the display driver, power-on and initialization of the display screen in response to the screen touching event.

3. The method according to claim 2, wherein the always on display trigger condition comprises: the electronic device has enabled the always on display function, the display screen is in the screen-off state, and a user input operation is the preset screen touching operation.

4. The method according to any one of claims 1 to 3, wherein the preset screen touching operation is an operation of touching or single-tapping the display screen.

5. The method according to any one of claims 1 to 4, wherein the triggering, by the display driver, power-on and initialization of the display screen comprises:
triggering, by the display driver, the display screen integrated circuit IC to start power-on and initialization.

6. The method according to any one of claims 1 to 5, wherein the triggering, by the display driver in response to the AOD display instruction, the display screen to display an always on pattern comprises:
sending, by the display driver, the AOD display instruction to the display screen IC, so that the display screen IC controls, based on the AOD display instruction, the display screen to display the always on pattern.

7. The method according to any one of claims 1 to 6, wherein the processor further comprises an input subsystem;
the screen touching event is further transferred by the touchscreen driver to the input subsystem, and the input subsystem transfers the screen touching event to the AOD application; and
the power-on instruction and the AOD display instruction are instructions delivered by the AOD application in response to the screen touching event.

8. The method according to claim 7, wherein a moment at which the screen touching event is transferred to the display driver is earlier than or equal to a moment at which the screen touching event is transferred to the AOD application.

9. The method according to any one of claims 1 to 8, wherein the processor further comprises a power manager service module, a surface drawing SurfaceFlinger service module, and a hardware composer HWC; and
the power-on instruction is delivered by the AOD application, and reaches the display driver through transmission by using the power manager service module, the SurfaceFlinger service module, and the HWC.

10. The method according to claim 9, wherein
after the power-on instruction is transmitted to the HWC module, the HWC module sends the power-on instruction to the display driver; and when the HWC module receives the completion message returned by the display driver, the HWC module sends the AOD display instruction to the display driver.

11. An electronic device, comprising a display screen, a processor, a memory, and a computer program stored in the memory, wherein the processor is configured to execute the computer program, to enable the electronic device to implement the method according to any one of claims 1 to 10.

12. A computer-readable storage medium, wherein the computer-readable storage medium stores a computer program, and when the computer program runs on an electronic device, the electronic device is enabled to perform the method according to any one of claims 1 to 10.

13. A computer program product, wherein the computer program product comprises computer program code, and when the computer program code is run by an electronic device, the electronic device is enabled to perform the method according to any one of claims 1 to 10.
